# EUROPEAN PATENT SPECIFICATION

(11) **EP 4 115 042 B1**
(45) Date of publication and mention of the grant of the patent: **12.11.2025**
(21) Application number: 21709473.9
(22) Date of filing: 21.02.2021
(51) Int. Cl.: E06B 3/66, C03C 17/36, C03C 23/00, B32B 17/06, H01Q 15/00, E06B 3/67

(54) **GLAZING UNIT**
VERGLASUNGSEINHEIT
UNITÉ DE VITRAGE

(30) Priority: 02.03.2020 CH 2492020
(43) Date of publication of application: 11.01.2023
(73) Proprietor: ECOLE POLYTECHNIQUE FEDERALE DE LAUSANNE (EPFL), 1015 Lausanne (CH)
(72) Inventor: SCHUELER, Andreas, 1018 Lausanne (CH); BURNIER, Luc, 74520 Savigny (FR); FLEURY, Jérémy, 1110 Morges (CH); JAMALY, Nima, 3008 Bern (CH)
(74) Representative: Vesterinen, Jussi Tapio
(86) International application number: PCT/IB2021/051460
(87) International publication number: WO 2021/176294

(56) References cited:
- EP-A1- 2 363 285
- EP-B1- 0 140 969
- WO-A1-2014/177772
- DE-A1- 19 508 042
- JP-A- 2011 102 218
- KR-A- 20130 038 134
- US-A- 5 364 685
- US-A1- 2015 202 719
- US-A1- 2018 036 839
- AGC: "TECHANICAL INFORMATION", 2008, pages 1 - 10, XP093163051, Retrieved from the Internet <URL:https://www.goricastaklo.hr/wp-content/uploads/2019/01/AGC-Safety-glass-technical_information_2008_en.pdf> [retrieved on 20240516]
- AGC: "STRATOBEL POLYCARBONATE", 2020, pages 1 - 1, XP093163032, Retrieved from the Internet <URL:https://www.agc-yourglass.com/sites/default/files/brochures/original/Stratobel%20Polycarbonate.pdf> [retrieved on 20240516]
- THORSTEN WEIMAR: "Research on Thin Glass-Polycarbonate Composite Panels", CHALLENGING GLASS CONFERENCE PROCEEDINGS, May 2018 (2018-05-01), pages 1 - 10, XP093163058, Retrieved from the Internet <URL:https://proceedings.challengingglass.com/index.php/cgc/article/download/108/108/821> [retrieved on 20240516], DOI: 10.7480/cgc.6.2148
- BOUVARD OLIVIA ET AL: "Structured transparent low emissivity coatings with high microwave transmission", APPLIED PHYSICS A MATERIALS SCIENCE & PROCESSING, SPRINGER BERLIN HEIDELBERG, BERLIN/HEIDELBERG, vol. 123, no. 1, 22 December 2016 (2016-12-22), pages 1 - 10, XP036143803, ISSN: 0947-8396, [retrieved on 20161222], DOI: 10.1007/S00339-016-0701-8

## Description

### TECHNICAL FIELD

The present invention relates to a glazing unit especially suitable for multiple input, multiple output (MIMO) technology in telecommunications. More specifically, the glazing unit comprises a patterned coating on at least one of its surfaces exposed to electromagnetic radiation that improves the glazing unit in terms of MIMO efficiency.

### BACKGROUND OF THE INVENTION

In order to reduce energy consumption of for example trains and buildings, energy saving windows with better thermal properties are increasingly used. These energy saving windows are typically composed of two or more windowpanes. The thickness of the glass panes is selected to satisfy mechanical requirements of the glazing unit given by regulations. The gap between the glass panes suppresses acoustic noise, and it also improves thermal insulation. Energy saving windows typically comprise one or more coated glass panes. This coating has a low thermal emissivity and therefore reduces the heat transfer by radiation. It can also be a sun protection coating, reducing the transmission in the near infrared region. It is generally made of one to three layers of silver (Ag) along with some dielectric layers (zinc oxide (ZnO), silicon nitride (Si3N4), titanium dioxide (TiO2), etc.). Most trains and many modern buildings have a metallic structure, which when combined with the coating having one or more metallic layers on the windows, results in strong microwave attenuation inside the structure due to a Faraday cage effect. Electromagnetic (EM) waves used for telecommunications are thus strongly attenuated. This can be problematic, as nowadays, wireless communications are increasingly used.

Many currently used mobile communication systems rely on multiple input, multiple output (MIMO) antenna technology for wireless communications in which multiple antennas are used at both the source (transmitter) and the destination (receiver) to increase the spectral efficiency. In the simplest version, a MIMO system is composed of two antennas at the transmitter side and two antennas at the receiver side, making it a 2x2 MIMO system. Compared to a single transmit and receive antenna, a MIMO system may increase both the diversity through an increase in independently fading signal paths, and/or the degrees of freedom of the received signal space. This may increase the achievable data rates and/or the reliability of the communication of a MIMO system compared to a legacy single input, single output (SISO) system with one transmit and one receive antenna. In practice, a 2x2 MIMO system may be implemented using a cross-polarised antenna at both the transmitter and receiver sides, where polarisation refers to the orientation of the electric field with respect to the earth's surface as radiated from, or received at, an antenna.

In a legacy SISO system, throughput depends on various parameters, such as signal-to-interference-plus-noise ratio (SINR), and bandwidth. For a MIMO system, the throughput also depends on further parameters.

For example, it is well known that the number of spatial streams a MIMO system supports, called spatial multiplexing, is limited by the rank of the channel matrix between the transmitter and receiver. The rank of a channel matrix, in turn, depends on the number of non-zero singular values of the channel matrix. But, the capacity of the channel not only depends on the number of non-zero singular values but also on how far the numerical values of the non-zero singular values lie apart, i.e. their numerical distribution. The more equal the non-zero singular values are, the higher the capacity of the MIMO channel. When the numerical values of the non-zero singular values differ a lot, the transmission losses of the links between the transmitter antennas and the receiver antennas differ a lot and this is called a path loss imbalance. Such a path loss imbalance generally impairs the performance of a MIMO system.

It is thus important in MIMO systems to have a balanced path loss between the two spatial links in order to optimise MIMO system performance. In other words, if a MIMO system is implemented by using cross-polarised antennas, then the overall path loss for the two polarisations should be as similar as possible to achieve advantageous throughput. However, this is currently not achieved when using existing insulating glazing units as these units, when electromagnetic waves propagate through them, lead to a significant path loss imbalance.

US5364685 concerns the problem of reflection of a radio wave such as a television broadcast wave from a laminated panel having a substrate low in reflectance for radio waves and a layer relatively high in reflectance for radio waves. The reflection is greatly reduced by dividing the reflective layer into a plurality of discontinuous segments by a series of relatively narrow slits such that the width of each segment in the direction parallel to the direction of the electric field of the radio wave is not greater than 1/3 of the wavelength of the radio wave.

WO2014/177772 A1 discloses a window comprising at least two selective glass panes coated with a selective film, and which selective glass panes comprise an uncoated area for improving the penetration of radio waves. In one selective glass pane the uncoated area is lattice-shaped and in other selective glass panes the uncoated area is at the same point as the lattice-shaped uncoated area.

US2018/0036839 A1 relates to a modified low emissivity (low-E) coated glass, so that windows using the processed glass allow uninterrupted use of RF devices within commercial or residential buildings. Glass processed in the manner described will not significantly diminish the energy conserving properties of the low-E coated glass. This method and apparatus disrupt the conductivity of the coating in small regions. In an embodiment, the method and apparatus ablate the low-E coating along narrow contiguous paths, such that electrical conductivity can no longer occur across the paths. The paths may take the form of intersecting curves and/or lines, so that the remaining coating consists of electrically isolated areas. The method and apparatus are applicable both to treating glass panels at the factory as well as treating windows in-situ after installation.

### SUMMARY OF THE INVENTION

It is an object of the present invention to overcome at least some of the problems identified above related to glazing units. More specifically, one of the aims of the present invention is to provide a glazing unit that is advantageous for MIMO systems. One of the aims is thus to propose a glazing unit that when exposed to electromagnetic radiation having two different polarisations is able to reduce the path loss imbalance for the two polarisations for a wide range of angles of incidence.

According to a first aspect of the invention, there is provided a structure comprising a glazing unit as recited in claim 1.

The proposed structure has the advantage that the glazing unit has energy saving capabilities and it is especially suitable for MIMO technology used in telecommunications. This glazing unit shows a low attenuation for broadband microwave frequencies, and a small difference between parallel/horizontal and perpendicular/vertical polarisations (with respect to the plane of incidence), which allows a significant increase of MIMO efficiency even for high angles of incidence.

The structure may form an enclosure of conductive material, such as metal, and forming a Faraday cage.

Other aspects of the invention are recited in the dependent claims attached hereto.

### BRIEF DESCRIPTION OF THE DRAWINGS

Other features and advantages of the invention will become apparent from the following description of a non-limiting example embodiment, with reference to the appended drawings, in which:
- Figures 1a to 1m are partial cross-sectional views of example insulating glazing units according to the present invention;
- Figures 2a to 2f illustrate different example patterns of the coating used in the glazing unit according to the present invention; and
- Figure 3 shows exemplary simulation results for the configuration of Figure 1b.

### DETAILED DESCRIPTION OF AN EMBODIMENT OF THE INVENTION

An embodiment of the present invention will now be described in detail with reference to the attached figures. This embodiment is described in the context of an insulating glazing unit for a train wagon, but the teachings of the invention are not limited to this environment. For instance, the teachings of the present invention could be used in other applications or environments, such as in buildings. Identical or corresponding functional and structural elements which appear in the different drawings are assigned the same reference numerals. It is to be noted that the use of words "first", "second" and "third", etc. may not imply any kind of particular order or hierarchy unless this is explicitly or implicitly made clear in the context.

The following definitions may be used in the context of the present invention:
- An insulating glazing unit (IGU) is understood to be an element comprising two or more windowpanes.
- A windowpane can be made for example of borosilicate or soda lime (float) glass and/or polymer, such as polycarbonate, acrylic glass, polyethylene terephthalate or other transparent polymers or of laminate layers or sheets of at least the above-mentioned materials.
- Lamination is a technique or process of manufacturing where a pane comprises multiple layers to form a pane so that the composite element achieves improved strength, stability, sound insulation, appearance, and/or other properties from the use of the differing materials. A laminate is a permanently assembled object created using, for example, heat, pressure, welding and/or gluing.
- An interlayer binds different layers together. It can be made of different photoresists or thermoplastics, for example, such as polyvinyl butyral (PVB), ethylene-vinyl acetate (EVA), thermoplastic polyurethane (TPU), polyolefin elastomer (POE), etc.
- Telecommunication frequencies are considered frequencies in the region from 300 MHz to 70 GHz.
- Absolute permittivity, which is often simply called permittivity and denoted by the Greek letter ε (epsilon), in electromagnetism, is a measure of how much a dielectric may polarise. A material with high permittivity polarises more in response to an applied electric field than a material with low permittivity, thereby storing more energy in the electric field. The SI unit for permittivity is farad per meter (F/m).
- Relative permittivity, also known as a dielectric constant, κ (kappa) of a material is its (absolute) permittivity expressed as a ratio relative to the vacuum permittivity. In the context of the present invention, a low relative permittivity material is considered a material with a relative permittivity value below 5.5 for at least one or more telecommunication frequencies.
- A gap in a glazing unit is the space between two adjacent panes of a glazing unit, and it can be filled with air, noble gases (e.g. argon) and/or vacuum, for example.
- A coating is a covering that is applied to the surface of an object, also referred to as the substrate. **In** general, the purpose of applying a coating may be decorative, functional, or both. **In** accordance with various embodiments of the present invention, the coatings referred to in this text are functional. The coating itself may be an all-over coating, completely covering the substrate, or it may only cover a part or parts of the substrate.
- Emissivity is the normalised value given to materials based on the ratio of heat emitted compared to a perfect black body, on a scale from zero to one. A black body would have an emissivity value of 1 and a perfect reflector would have an emissivity value of 0.
- A low emissivity coating refers to a layer that emits low levels of thermal radiation (heat). Low emissivity coatings are usually made of multiple layer coatings of dielectric and/or metallic thin films.
- Wireless communication is the transfer of information between two or more points that are not connected by an electrical conductor, frequently over radio waves.
- Incident angle is the angle between the direction of propagation of an electromagnetic wave incident on a surface and the line perpendicular to the surface at the point of incidence, called the normal.
- Transmission loss in the context of the present invention describes the accumulated decrease in electrical power of a wave as it propagates through a certain area or through a certain type of structure.
- Multiple input, multiple output, or MIMO, is a technique for a radio link using multiple transmission and receiving antennas.
- Path loss imbalance in the context of the present invention is defined as the difference in transmission losses for different signal paths (e.g. different polarisations) of electromagnetic waves propagating through a medium.
- Plane of incidence (also called the incidence plane) may be understood to be the plane which contains the surface normal and the propagation vector (or k-vector, or wavevector) of the incoming radiation. When reflection is specular, as it is for a mirror or other shiny surface, the reflected ray also lies in the plane of incidence. When refraction also occurs, the refracted ray lies in the same plane.
- Polarisation is a property applying to transverse waves which specifies the geometrical orientation of the oscillations. An electromagnetic wave, such as light, consists of a coupled oscillating electric field and magnetic field, which are perpendicular. By convention, the polarisation of electromagnetic waves refers to the direction of the electric field. P-polarised waves are understood to have an electric field direction parallel to the plane of incidence on an object, and s-polarised waves have an electric field oriented perpendicular to that plane.
- Throughput or network throughput is the rate of successful information delivery over a communication channel. Throughput is usually measured in bits per second (bit/s or bps) or in megabits per second (Mbps), and sometimes in data packets per second (p/s or pps) or data packets per time slot.

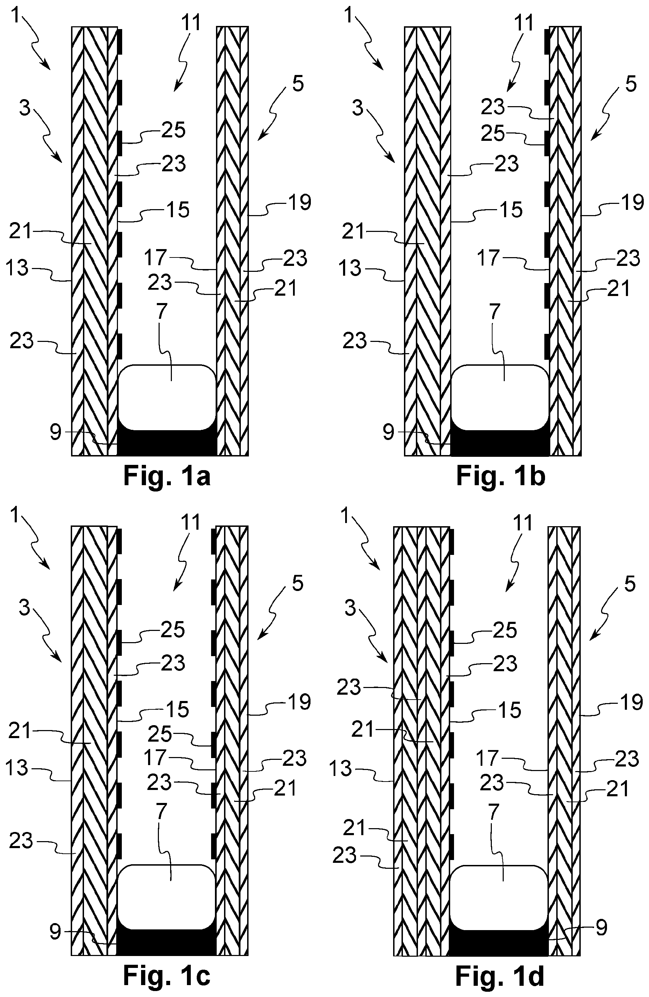

The main motivation behind the present invention was to propose an improved glazing design for windowpanes. The windowpanes should not only satisfy mechanical and tension requirements, but they should also provide low attenuation and an advantageous path loss imbalance, particularly between the s (perpendicular) and p (parallel) polarisations, for a wide range of angles of incidence and broadband frequencies used for wireless telecommunication. The insulating glazing unit 1 or window according to the present invention, and as shown in Figures 1a to 1m, is assembled from two or more windowpanes. **In** most of the examples explained below, each windowpane contains polymer, such as polycarbonate or acrylic glass, and/or glass such that each material or layer has a low relative permittivity (below 5.5). **In** accordance with various embodiments of the invention, Figures 1a to 1m illustrate various exemplary material combinations. A structured coating with low thermal emissivity, i.e., an emissivity value below 20% or approximately 20% (usually named low-e coating), applied to one or more surfaces of the glazing unit generally results in low attenuation for broadband microwave frequencies and a small path loss imbalance between parallel and perpendicular polarisations, which may allow a significant increase of MIMO efficiency even for high angles of incidence.

Figure 1a is a cross-sectional view showing a portion of an example insulating glazing unit 1 according to the present invention. Figures 1b to 1m are also cross-sectional views similar to the view of Figure 1a, and they illustrate variants of the proposed insulating glazing unit 1. Figures 1a to 1m thus illustrate cross-sectional side profiles of a bottom or lower half of a glazing unit. In Figures 1a to 1m, electromagnetic waves can propagate through the glazing insulating unit 1 from left to right (or vice versa). As shown in Figure 1a, the glazing unit 1 comprises a first windowpane 3 and a second windowpane 5. In this example, the windowpanes 3, 5 are flat or substantially flat elements, but they could instead be curved or partially curved along one or more axes. In this example, the first and second windowpanes 3, 5 are arranged parallel or substantially parallel with respect to each other, but this does not have to be the case. A spacer 7 is provided, which in this case is placed around the perimeter of the glazing unit, to keep the first and second windowpanes 3, 5 apart at a desirable distance. In this example, the glazing unit 1 is circumferentially surrounded by a sealing element 9 or seal in order to seal the gap or space 11 formed between the windowpanes 3, 5. The gap 11 may be filled with gas, such as air or argon, to improve the thermal and/or acoustic noise insulating properties of the glazing unit 1. The first windowpane 3 defines a first surface 13 and a second, opposite surface 15, while the second windowpane 5 defines a third surface 17 and a fourth, opposite surface 19. In this example the first surface 13 is facing towards the outside of the train, while the fourth surface 19 is facing towards the inside of the train. The second and third surfaces 15, 17 are facing towards each other and also towards the gap 11 formed between the first and second windowpanes 3, 5.

In the example of Figure 1a, both the first and second windowpanes 3, 5 are laminated elements. More specifically, they comprise at least two layers attached, bonded, fixed or glued together. In the example of Figure 1a, both the first and second windowpanes 3, 5 comprise three layers: a polymer layer 21 is sandwiched and bonded between two glass layers 23. In this specific example, the polymer layer 21 is a polycarbonate layer, while the glass layers are borosilicate layers. Thus, the laminated windowpanes 3, 5 in this example comprise one central polycarbonate layer, which is bonded to two borosilicate outer glass layers. As will be explained later in more detail, any given windowpane may comprise any desired combination of layers (or only one layer). A given layer may for instance be made of any of the following materials: borosilicate glass, soda lime (float) glass, polycarbonate polymer, acrylic glass, polyethylene terephthalate (PET), and any other transparent polymer, as long as one layer is a glass layer with a relative permittivity as defined in claim 1.

The insulating glazing units 1 according to the present invention are thus assembled from two or more windowpanes, which comprise one or more layers. A windowpane can be made of glass, such as borosilicate or soda lime (float) glass, and/or polymer, such as polycarbonate, acrylic glass, PET or other transparent polymers, or of laminate layers of the above or other suitable materials, as illustrated for Figure 1a. According to the present examples, each windowpane is thus made of a material or a composite material so that the relative permittivity of a given layer is below 5.5 or 5.0 at one or more frequencies in the range of 300 MHz to 70 GHz, or more specifically in the range of 300 MHz to 20 GHz, or in the range of 300 MHz to 6 GHz. Depending on the materials used to build the layers, the relative permittivity of a given layer or material may be even below 3.0 at one or more frequencies in the range of 300 MHz to 70 GHz, or more specifically in the range of 300 MHz to 20 GHz, or in the range of 300 MHz to 6 GHz. However, it is to be noted that it would be possible to build the glazing unit so that only one of the layers of the glazing unit satisfies the above permittivity condition.

The layers can optionally be mechanically strengthened or toughened by suitable thermal or chemical treatments. For lamination, an interlayer (not shown in the figures) is used in the present examples to bond different layers together, and it can be made of different photoresist or thermoplastic, such as polyvinyl butyral (PVB), ethylene-vinyl acetate (EVA), thermoplastic polyurethane film (TPU), polyolefin elastomer, etc. An interlayer may thus be placed between any two adjacent layers.

The cross-sectional thickness of the layers used in the glazing unit of the present invention may be between 0.1 mm and 20 mm, or more specifically between 0.5 mm and 10, or between 0.8 mm and 6 mm. In the examples shown in Figures 1a to 1m, each layer has a thickness in the range of 1 mm to 4 mm. In the example of Figure 1a, the first windowpane 3 is thicker than the second windowpane 5 to increase the mechanical strength of the first windowpane 3, for example, which is the pane exposed to the outside environment. In this example, the increased thickness is achieved by making the layers in the first windowpane 3 thicker than the layers in the second windowpane 5. However, some windowpanes may be made thinner by having fewer layers than in the other windowpanes in addition to, or instead of, reduced number of layers. However, it would also be possible to make the first and second windowpanes 3, 5 of equal thickness. Alternatively, the second windowpane 5 could be thicker than the first windowpane 3.

The glazing unit 1 also comprises a structured or patterned coating 25 with low thermal emissivity (a low-e coating). The coating may, for example, comprise a metal layer, such as a silver layer (to make it a silver-based coating), sandwiched between two oxide or dielectric layers, which may be any one of the following layers: zinc oxide (ZnO), silicon nitride (Si3N4), and titanium dioxide (TiO2) layers. As will be obvious to a person skilled in the art, the invention shall not be limited to these specific oxide or dielectric layer materials. The coating 25 may be deposited onto a desired surface by applying sputter deposition, which is a physical vapour deposition (PVD) method of thin film deposition by sputtering. Alternatively, the coating 25 may be a pyrolytic coating, which is a thin film coating applied at high temperatures and sprayed onto a glass surface, during the float glass process. The cross-sectional thickness of the transparent coating 25 may be between 10 nm and 1000 nm, or more specifically between 50 nm and 300 nm, or more specifically between 100 nm and 200 nm.

The coating 25 is placed on at least one of the surfaces 13, 15, 17, or 19 of the glazing unit 1. In the example of Figure 1a, the coating 25 is placed on the second surface 15, while in the glazing unit of Figure 1b, the coating 25 is placed on the third surface 17. In the example of Figure 1c, the glazing unit 1 comprises two coatings 25 so that one of them is placed on the second surface 15, and the other one is placed on the third surface 17. It is to be noted that the two coatings may be different from each other. For instance, different materials (e.g. different metals and/or dielectrics) may be used to build them, and/or different sandwich structures may be used.

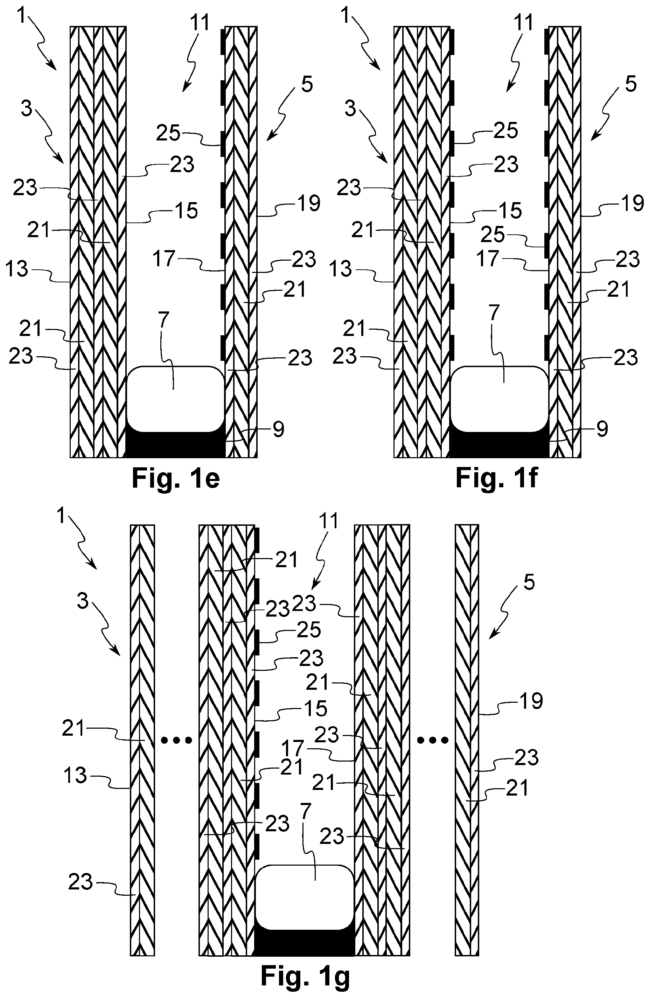

The glazing units 1 of Figures 1d, 1e, and 1f are similar to the glazing units 1 of Figures 1a, 1b, and 1c, respectively, with the difference that the first windowpane 3 in the configuration of Figures 1d to 1f comprises five layers contrary to three layers in the configurations of Figures 1a to 1c. This has, inter alia, the advantage that the first windowpane 3 may be made mechanically stronger. The polymer layers 21 of the first windowpane 3 in the configurations of Figures 1d to 1f can be made thinner than in the configurations of Figures 1a to 1c to achieve comparable mechanical strength. More specifically, the cross-sectional thickness of the polymer layers 21 in the configurations of Figures 1d to 1f is advantageously between 1.1 and 3 times the cross-sectional thickness of the glass layers 23, or more specifically between 1.4 and 2.4 or between 1.4 and 1.9 times the thickness of the glass layers 23.

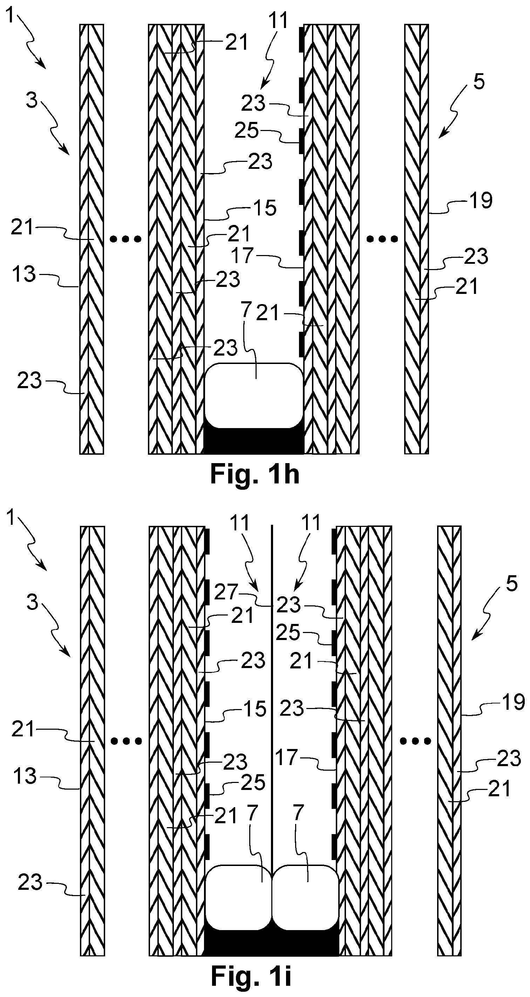

The glazing units 1 of Figures 1g and 1h are similar to the glazing units 1 of Figures 1d and 1e, respectively, with the difference that the first and/or second windowpanes 3, 5 of the glazing units 1 shown in Figures 1g and 1h comprise N layers attached or bonded together. **In** the windowpanes 3, 5 of Figures 1g and 1h, the polymer layers 21 and the glass layers 23 alternate, i.e., these layers occur in turn repeatedly. **It** is to be noted that in most of the configurations shown in Figures 1a to 1m, the outermost layers of a given windowpane are formed by the glass layers 23 as they are mechanically stronger than the polymer layers 21. **In** other words, the first, second, third and fourth surfaces 13, 15, 17, 19 are in these examples glass surfaces. However, it would be possible to build the windowpanes 3, 5 so that the outermost layers would be polymer layers instead of glass layers. **It** would also be possible to build the windowpanes 3, 5 by having any desired order of the layers, for instance so that two or more adjacent glass layers 23 would be bonded together, or two or more adjacent polymer layers would be bonded together.

The glazing unit shown in Figure 1i is similar to the glazing units shown in Figures 1g and 1h, but with the difference that the glazing unit 1 of Figure 1i comprises two coatings 25, i.e., one coating 25 placed on each one of the second and third surfaces 15, 17. Furthermore, the glazing unit of Figure 1i comprises a polymer sheet 27 to increase thermal and/or acoustic insulation, which may also be considered a windowpane, in the gap 11, and which in this example is arranged parallel or substantially parallel to the two glass layers 23. The structured coating 25 is in this example present on outermost windowpanes 3, 5, which are in this example mechanically stronger than the windowpane formed by the polymer sheet 27. Moreover, the glazing unit 1 shown in Figure 1i comprises two spacers 7 instead of just one as shown in Figures 1a to 1h. In this example, the polymer sheet 27 is sandwiched between the two spacers to firmly hold the polymer sheet 27 in place. The polymer sheet 27 thus divides the gap 11 into two spaces. In this example, the polymer sheet 27 is thinner than any of the layers of the windowpanes. It is to be noted that the polymer sheet 27 could be applied to any of the glazing units 1 shown in Figures 1a to 1m.

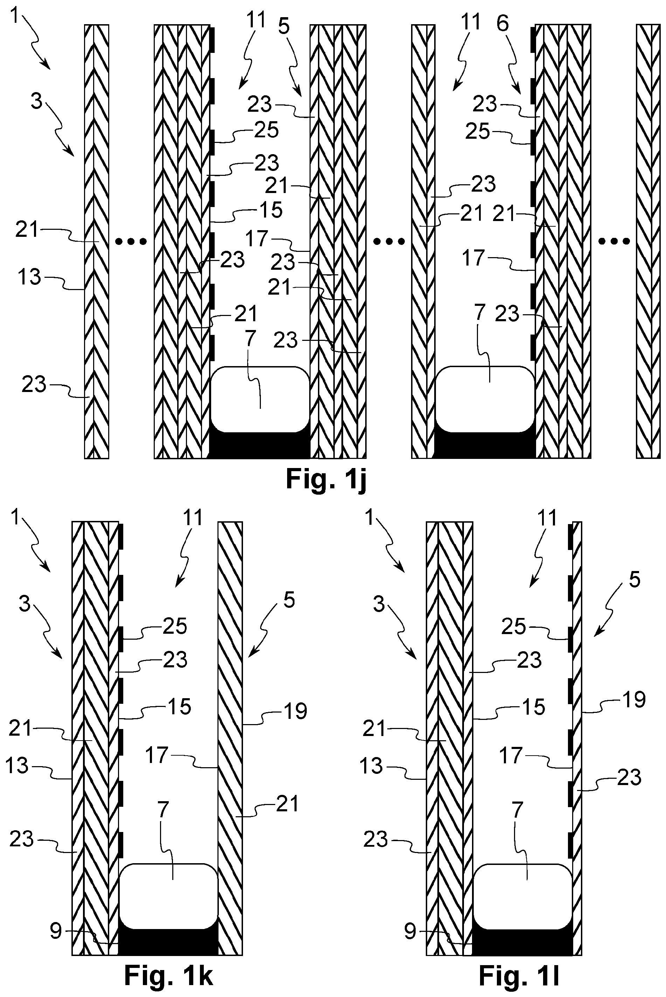

The glazing unit 1 shown in Figure 1j is similar to the configurations of Figures 1g and 1h, but with the difference that the glazing unit 1 of Figure 1j comprises three windowpanes, namely a first windowpane 3, a second windowpane 5 and a third windowpane 6. In this example, the second windowpane 5 is the middlemost windowpane while the first and third windowpanes 3, 6 are the outermost windowpanes. The number of the layers in the windowpanes may be chosen to match the requirements of the application. Furthermore, the glazing unit 1 of Figure 1j comprises two coatings 25.

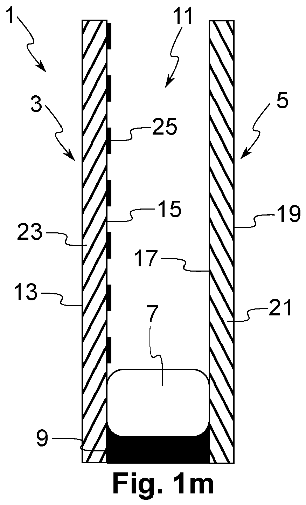

The configurations of Figures 1k to 1m show further variants of the glazing unit 1. The glazing unit 1 of Figure 1k is similar to the glazing unit of Figure 1a, but with the difference that the second windowpane 5 is a one-layer windowpane, namely the second windowpane 5 comprises only one polymer layer 21. The glazing unit 1 of Figure 1l is similar to the glazing unit of Figure 1b, but with the difference that the second windowpane 5 is a one-layer windowpane, namely the second windowpane 5 comprises only one glass layer 23. The glazing unit 1 of Figure 1m is similar to the glazing unit of Figure 1a, but with the difference that the first and second windowpanes 3, 5 are both one-layer windowpanes, namely the first windowpane 3 comprises only one glass layer 23, while the second windowpane 5 comprises only one polymer layer 21.

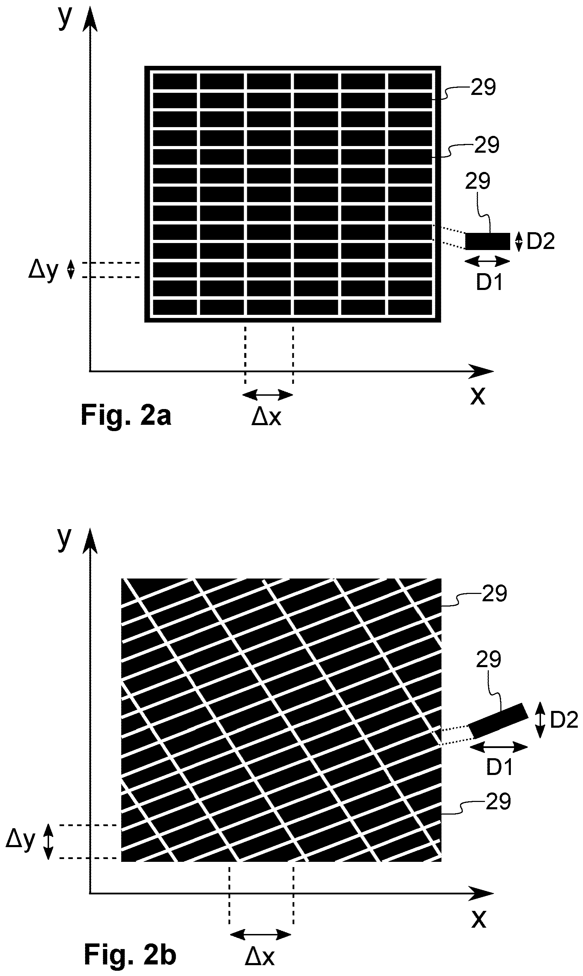

Figures 2a to 2f illustrate examples of different patterns for the structured coating 25. The patterns are illustrated in the examples of Figures 2a to 2f in a coordinate system, where the x-axis represents the horizontal axis (with respect to the ground), and the y-axis represents an axis which is orthogonal to the x-axis and follows the surface of the coating or more specifically the surface of a coating patch 29. Thus, if the glazing unit is placed vertically, then the y-axis is a vertical axis. Δx denotes the length of a coating patch 29, or its projection (if the patch does not extend horizontally), along the x-axis, while Δy denotes the height of a coating patch 29, or its projection (if the patch does not extend vertically), along the y-axis. D1 denotes a first dimension D1, which in this example is parallel to the x-axis, while D2 denotes a second, orthogonal dimension, which in this example is parallel to the y-axis. The black regions correspond to the coating patches 29, while the white regions show trenches 31, channels, or ditches made to the respective coating. In this example, the trenches extend cross-sectionally through the coating, and thus the trenches reach the surface of the layer underneath. The trenches thus electrically separate different electrically conductive cells, patches or regions formed in the coating from each other. Laser engraving or scribing may be used to etch the pattern. In this manner a laser-structured coating can be obtained, where the thermal emissivity of the coating is at most approximately 20%, or more specifically at most approximately 15%. The ablated area (i.e., the surface area of the trenches 31) is kept small thanks to very narrow ablated lines. Furthermore, as the lines are very small, the structure is hardly seen by the naked eye in most situations. It has been discovered that good results are obtained if the patches are separated from each other by a distance in the range of 0.001 mm to 0.5 mm, and more specifically by distance in the range of 0.01 mm to 0.1 mm.

Addition of a coating to the windowpane 1 slightly increases the transmission loss of both polarisations and increases the path loss imbalance. In other words, the coating somewhat attenuates the electromagnetic waves propagating through the glazing unit 1 and thus through the surfaces defined by the layers of the windowpanes, for example surfaces 13, 15, 17, and 19 in Figure 1a. It is to be noted that assuming the incoming wave is horizontal or substantially horizontal (i.e., with an angle at most approximately +/-10 degrees) with respect to the ground or earth's surface, and when the incident angle of the incoming wave is higher than zero degrees (zero-degree incident angle being normal to the windowpane), then the s-polarised component would be clearly more attenuated than the p-polarised component by the coating with non-elongated patches, when the incoming wave passes through the windowpane at incident angles higher than 0 degrees (0 degrees is normal to the surface). Thus, to reduce the path loss imbalance between the two polarisations and/or other antennas, one dimension of the rectangular patches 29 is increased, i.e., the patches 29 are made into elongated shapes, such as rectangles, instead of squares (in the examples of Figures 2a and 2b). In this case, the aim is to attenuate more the p-polarised component, while keeping the attenuation of the s-component substantially unaffected by the patch shape. Coatings with asymmetrical patches attenuate one polarisation more than the other, which may improve MIMO performance. More specifically, by properly orienting and sizing the elongated patches 29, one of the polarisations can be attenuated more than the other polarisation. Assuming the incoming wave is horizontal or substantially horizontal with respect to the ground, then the p-component can be attenuated more than the s-component, if the length or the length projection of the patches 29 along a first, horizontal axis is greater than the height or the height projection of the patches 29 along a second, orthogonal axis, for instance in a position, where the glazing unit 1 is assembled in a construction destined to receive it. The first axis substantially horizontally follows a respective patch surface or its virtual extension, and the second axis follows the respective patch surface or its virtual extension orthogonally to the first axis. Thus, the first and/or second axis/axes may be straight or curved depending on the shape the respective patch. In this manner the transmission losses of the different polarisations may be made substantially similar. In most practical applications, the s-polarisation may not be affected by varied length of the patches 29 (which in this case extend in the plane defined by the p-polarisation and is a horizontal plane in this example). On the other hand, the transmission loss of the p-polarisation is dependent on the length of the patches, and thus the transmission loss of the p-polarisation may be made substantially similar to the transmission loss of the s-polarisation. It is, for example, possible to design the glazing units 1, and in particular the coating 25, so that for electromagnetic waves of one or more frequencies in the range of 300 MHz to 70 GHz, the difference in transmission loss between parallel and perpendicular polarisation is below approximately 7 dB, for incident angles in the range of 0 to 90 degrees.

As can be seen in Figures 2a to 2f, the patches 29 are in these examples made longitudinal and they thus define a length axis along which the patches 29 extend (for instance, in the example of Figure 2a, the length axis is parallel to the x-axis). In other words, their first dimension D1 is greater than a second, orthogonal or substantially orthogonal dimension D2. In the examples of Figures 2a to 2f, the first dimension D1 extends along the x-axis, which in this example is a horizontal axis, while the second dimension D2 extends along the y-axis, which is orthogonal to the x-axis, and is often a vertical axis, but not always (in particular when the coating 25 is not oriented vertically but would be curved or tilted with respect to the vertical orientation). Both the x-axis and y-axis are parallel to the coated surface 13, 15, 17, 19. The patch shapes or their extension orientation may be defined more broadly so that at least some of the patches have a greater length Δx along a first dimension than a height Δy along a second, different dimension, where the first dimension follows a respective patch surface in a plane of incidence defined by an incoming electromagnetic wave and an electromagnetic wave reflected from the insulating glazing unit 1, and where the second dimension follows the respective patch surface orthogonally or substantially orthogonally to the first dimension. The first and second dimensions may thus be understood to extend tangentially along the patch surface.

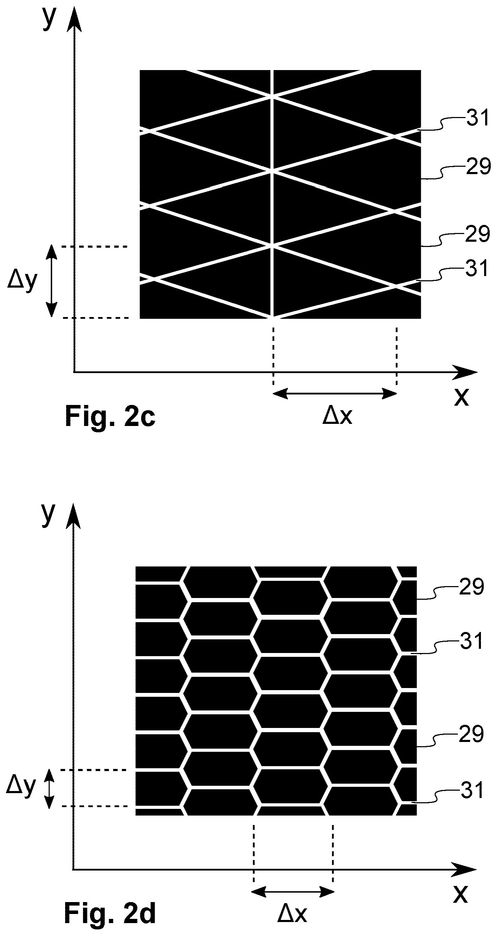

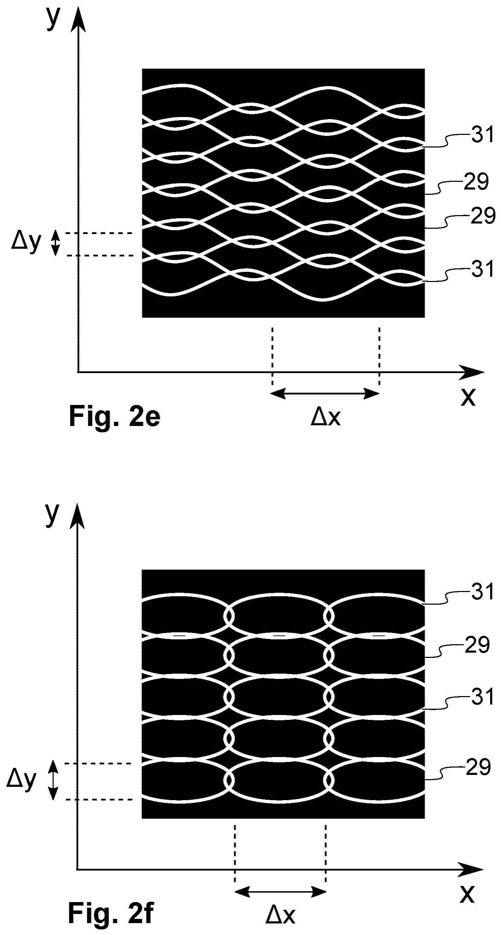

In the design of Figure 2a, the patches 29 are rectangles, and more specifically elongated rectangles, while in the design of Figure 2b, the patches 29 are tilted elongated rectangles or they could be rhomboids. In the design of Figure 2c, the patches 29 are triangles, while in the design of Figure 2d, the patches 29 are hexagons, and more specifically non-regular or elongated hexagons. In Figure 2e, waveforms are used to create the patches 29 while in Figure 2f, oval shapes are used to create the patches 29. More specifically, in the design of Figure 2e, first waveforms cross second waveforms to create patches of different sizes. In the design of Figure 2f, partially overlapping ovals are used to create patches of different sizes. It is to be noted other shapes, advantageously elongated shapes, would also or instead be possible, such as parallelograms or tilted parallelograms. For an improved balance of the transmission of electromagnetic waves of different polarisations at oblique angles of incidence, more than a third of the surface area (exposed to the electromagnetic waves) is covered with patches 29 for which the patch length Δx is greater than the patch height *Δy.* The patch length/height ratio may be between 1.1 to 20, or more specifically between 1.5 and 8, or 1.3 and 8 for optimum results. Furthermore, at least some of the patches have a length in the range of 0.5 mm to 20 mm, and more specifically in the range of 2 mm to 10 mm, or in the range of 4 mm to 10 mm.

The above examples thus described an insulating glazing unit 1 for receiving electromagnetic radiation, the insulating glazing unit 1 comprising:
- a first windowpane 3 defining at least a first surface 13 and a second surface 15, the first windowpane comprising a first polymer layer 21 and/or a first glass layer 23, the relative permittivity of the respective first layer being below 5.5 at one or more frequencies in the range of 300 MHz to 70 GHz;
- a second windowpane 5 at a given distance from the first pane 3, and defining at least a third surface 17 and a fourth surface 19, the second windowpane 5 comprising a second polymer layer 21 and/or a second glass layer 23, the relative permittivity of the respective second layer 21, 23 being below 5.5 at one or more frequencies in the range of 300 MHz to 70 GHz, the first, second, third and fourth surfaces 13, 15, 17, 19 being arranged so that the electromagnetic radiation when propagating through the insulating glazing unit 1 also propagates through the first, second, third and fourth surfaces 13, 15, 17, 19; and
- a structured coating 25 with thermal emissivity below approximately 20% placed on one or more of the surfaces, the coating being divided into electrically conductive patches, which are electrically insulated from each other.

However, as mentioned above, it is possible to build the glazing unit 1 so that only one of the layers of the glazing unit satisfies the above permittivity condition (relative permittivity of the respective layer being below 5.5) in the above frequency range or in a more limited range, such as 300 MHz to 20 GHz, or 300 MHz to 6 GHz. According to another example, two or more of the layers (e.g. all the layers, or one or more layers of each windowpane) of the glazing unit would satisfy the above permittivity condition.

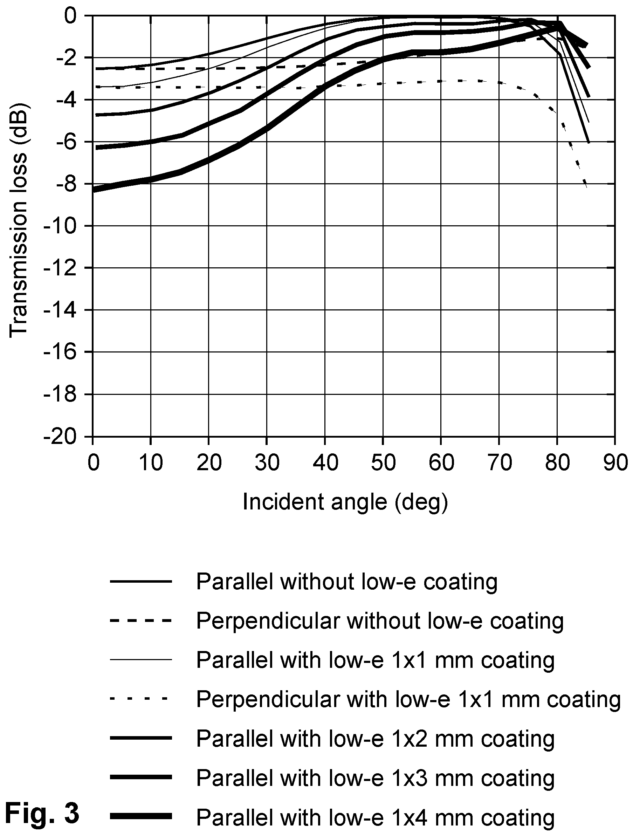

Figure 3 shows some simulation results for the configuration shown in Figure 1b, where the windowpanes 3, 5 are composed of borosilicate and polycarbonate layers. A 2x2 MIMO system is assumed, implemented with an s-polarised and a p-polarised antenna each on both the transmitter and receiver. The transmission loss is shown as a function of the incident angle. In the present simulation, the incoming wave is substantially horizontal. The design of Figure 1b comprises seven layers 21, 23, and the cross-sectional thicknesses of these layers, 21, 23 from left to right are as follows: 2 mm, 2 mm, 1 mm, 1 mm, 4 mm, and 2 mm. The gap width, i.e., the spatial separation of the two windowpanes 3, 5 is 20 mm. The transmission loss is plotted against the incident angles between 0 and 85 degree at 3.5 GHz. Rectangular patch shapes in accordance with the pattern of Figure 2a were used for the coating 25 with the following dimensions 1 mm *(Δy,* height) x 1 mm (Δx length), 1 mm *(Δy)* x 2 mm (Δx), 1 mm *(Δy)* x 3 mm (Δx), and 1 mm *(Δy)* x 4 mm (Δx). In Figure 3, the different curves as explained in the legend of Figure 3 illustrate the simulation results for different patch sizes and/or polarisations. The transmission loss for the perpendicular polarisation stays substantially unchanged for all the patches, and it is thus only plotted once for the patch size 1 mm x 1 mm for reference. The asymmetrical structuring of the low-e coating 25 slightly decreases the signal strength of the parallel polarised incident wave, which further improve the pathloss imbalance (<3 dB at 1 mm x 3 mm) for the two polarisations.

While the invention has been illustrated and described in detail in the drawings and foregoing description, such illustration and description are to be considered illustrative or exemplary and not restrictive, the invention being not limited to the **disclosed** embodiment.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A structure comprising a glazing unit (1) assembled therein, the glazing unit (1) comprising a plurality of windowpanes (3, 5) adapted to let pass electromagnetic radiation with low transmission loss, the glazing unit (1) comprising:
• a first windowpane (3) defining at least a first surface (13) and a second surface (15), the first windowpane (3) comprising a first glass layer (23);
• a second windowpane (5) at a given distance from the first windowpane (3) through a spacer (7) forming a gap or space (11) between the first and second windowpanes (3, 5), and defining at least a third surface (17) and a fourth surface (19), the second windowpane (5) comprising a second glass layer (23), the first, second, third and fourth surfaces (13, 15, 17, 19) being arranged so that the electromagnetic radiation when propagating through the glazing unit (1) also propagates through the first, second, third and fourth surfaces (13, 15, 17, 19); and
• a structured coating (25) with thermal emissivity below approximately 20% placed on one or more of the surfaces (13, 15, 17, 19), the coating (25) being divided into electrically conductive patches (29), which are electrically insulated from each other,
wherein the relative permittivity of the first glass layer (23) and the second glass layer (23) is below 5.5 at one or more frequencies in the range of 300 MHz to 70 GHz, wherein one or more of the patches (29) have an elongated shape, and wherein the first, second, third and fourth surfaces (13, 15, 17, 19) are glass surfaces.

2. The structure according to claim 1, wherein the length or length projection of the one or more patches (29) along a first axis is greater than the height or height projection of the one or more patches (29) along a second, different axis, wherein the first axis substantially horizontally follows a respective patch surface or its virtual extension, and the second axis follows the respective patch surface or its virtual extension orthogonally to the first axis.

3. The structure according to claim 2, wherein the first axis is a horizontal axis, and the second axis is a vertical axis.

4. The structure according to any one of the preceding claims, wherein at least one third of the respective surface (13, 15, 17, 19) where the coating (25) is placed is covered with patches (29) having an elongated shape, and/or wherein the one or more patches (29) extend substantially horizontally.

5. The structure according to any one of the preceding claims, wherein the ratio of a first, longitudinal dimension to a second, orthogonal dimension of the respective patch is between 1.3 and 8.

6. The structure according to any one of the preceding claims, wherein the patches (29) are separated from each other by laser-engraved trenches in the structured coating (25).

7. The structure according to any one of the preceding claims, wherein the patches (29) are separated from each other by a distance in the range of 0.001 mm to 0.5 mm, and more specifically by a distance in the range of 0.01 mm to 0.1 mm.

8. The structure according to any one of the preceding claims, wherein at least one of the first and second windowpanes (3, 5) is a laminated element, and wherein the laminated element is formed by a polymer layer (21) and the respective glass layer (23) bonded together by means of a respective interlayer between the respective polymer and glass layers (21, 23).

9. The structure according to claim 8, wherein the respective interlayer comprises at least one of the following materials: polyvinyl butyral, ethylene-vinyl acetate, thermoplastic polyurethane, and polyolefin elastomer.

10. The structure according to any one of the preceding claims, wherein the coating (25) is placed at least on one of the surfaces (15, 17) facing the space (11).

11. The structure according to any one of the preceding claims, wherein the glazing unit (1) further comprises a third windowpane (6) comprising a polymer layer (21) and/or a further glass layer (23), the relative permittivity of the respective layer (21, 23) of the third windowpane (6) being below 5.5 at one or more frequencies in the range of 300 MHz to 70 GHz.

12. The structure according to any one of the preceding claims, wherein at least some of the patches (29) have a length in the range of 0.5 mm to 20 mm, and more specifically in the range of 4 mm to 10 mm.

13. The structure according to any one of the preceding claims, wherein the structure is a railway carriage or a building.

## Patentansprüche

1. Eine Struktur, die eine darin montierte Verglasungseinheit (1) umfasst, wobei die Verglasungseinheit (1) eine Vielzahl von Scheiben (3, 5) umfasst, die dazu ausgelegt sind, elektromagnetische Strahlung mit geringer Übertragungsverlust passieren zu lassen, wobei die Verglasungseinheit (1) Folgendes umfasst:
• eine erste Scheibe (3), die mindestens eine erste Oberfläche (13) und eine zweite Oberfläche (15) definiert, wobei die erste Scheibe (3) eine erste Glasschicht (23) umfasst;
• eine zweite Scheibe (5) in einem bestimmten Abstand von der ersten Scheibe (3) durch einen Abstandhalter (7), der einen Spalt oder Zwischenraum (11) zwischen der ersten und zweiten Scheibe (3, 5) bildet und mindestens eine dritte Oberfläche (17) und eine vierte Oberfläche (19) definiert, wobei die zweite Scheibe (5) eine zweite Glasschicht (23) umfasst, wobei die erste, zweite, dritte und vierte Oberfläche (13, 15, 17, 19) so angeordnet sind, dass die elektromagnetische Strahlung beim Durchgang durch die Verglasungseinheit (1) auch durch die erste, zweite, dritte und vierte Oberfläche (13, 15, 17, 19) hindurchtritt; und
• eine strukturierte Beschichtung (25) mit einer thermischen Emissivität unter etwa 20%, die auf einer oder mehreren der Oberflächen (13, 15, 17, 19) angebracht ist, wobei die Beschichtung (25) in elektrisch leitfähige Patches (29) unterteilt ist, die elektrisch voneinander isoliert sind,
wobei die relative Permittivität der ersten Glasschicht (23) und der zweiten Glasschicht (23) bei einer oder mehreren Frequenzen im Bereich von 300 MHz bis 70 GHz unter 5.5 liegt, wobei ein oder mehrere der Patches (29) eine längliche Form aufweisen, und wobei die erste, zweite, dritte und vierte Oberfläche (13, 15, 17, 19) Glasoberflächen sind.

2. Die Struktur nach Anspruch 1, wobei die Länge oder Längenprojektion des einen oder mehrerer Patches (29) entlang einer ersten Achse größer ist als die Höhe oder Höhenprojektion des einen oder mehrerer Patches (29) entlang einer zweiten, unterschiedlichen Achse, wobei die erste Achse im Wesentlichen horizontal einer jeweiligen Patchoberfläche oder ihrer virtuellen Verlängerung folgt, und die zweite Achse der jeweiligen Patchoberfläche oder ihrer virtuellen Verlängerung orthogonal zur ersten Achse folgt.

3. Die Struktur nach Anspruch 2, wobei die erste Achse eine horizontale Achse ist und die zweite Achse eine vertikale Achse ist.

4. Die Struktur nach einem der vorstehenden Ansprüche, wobei mindestens ein Drittel der jeweiligen Oberfläche (13, 15, 17, 19), auf der die Beschichtung (25) angebracht ist, mit Patches (29) mit länglicher Form bedeckt ist, und/oder wobei der eine oder die mehreren Patches (29) sich im Wesentlichen horizontal erstrecken.

5. Die Struktur nach einem der vorstehenden Ansprüche, wobei das Verhältnis einer ersten, längsgerichteten Dimension zu einer zweiten, orthogonalen Dimension des jeweiligen Patches zwischen 1.3 und 8 liegt.

6. Die Struktur nach einem der vorstehenden Ansprüche, wobei die Patches (29) durch lasergeschnittene Gräben in der strukturierten Beschichtung (25) voneinander getrennt sind.

7. Die Struktur nach einem der vorstehenden Ansprüche, wobei die Patches (29) voneinander durch einen Abstand im Bereich von 0.001 mm bis 0.5 mm und insbesondere durch einen Abstand im Bereich von 0.01 mm bis 0.1 mm getrennt sind.

8. Die Struktur nach einem der vorstehenden Ansprüche, wobei mindestens eine der ersten und zweiten Scheiben (3, 5) ein laminiertes Element ist, und wobei das laminierte Element durch eine Polymerschicht (21) und die jeweilige Glasschicht (23) gebildet ist, die durch eine jeweilige Zwischenschicht zwischen den jeweiligen Polymer- und Glasschichten (21, 23) miteinander verbunden sind.

9. Die Struktur nach Anspruch 8, wobei die jeweilige Zwischenschicht mindestens eines der folgenden Materialien umfasst: Polyvinylbutyral, EthylenVinylacetat, thermoplastisches Polyurethan und Polyolefin-Elastomer.

10. Die Struktur nach einem der vorstehenden Ansprüche, wobei die Beschichtung (25) mindestens auf einer der dem Zwischenraum (11) zugewandten Oberflächen (15, 17) angebracht ist.

11. Die Struktur nach einem der vorstehenden Ansprüche, wobei die Verglasungseinheit (1) ferner eine dritte Scheibe (6) umfasst, die eine Polymerschicht (21) und/oder eine weitere Glasschicht (23) umfasst, wobei die relative Permittivität der jeweiligen Schicht (21, 23) der dritten Scheibe (6) bei einer oder mehreren Frequenzen im Bereich von 300 MHz bis 70 GHz unter 5.5 liegt.

12. Die Struktur nach einem der vorstehenden Ansprüche, wobei mindestens einige der Patches (29) eine Länge im Bereich von 0.5 mm bis 20 mm und insbesondere im Bereich von 4 mm bis 10 mm aufweisen.

13. Die Struktur nach einem der vorstehenden Ansprüche, wobei es sich bei der Struktur um einen Eisenbahnwagen oder ein Gebäude handelt.

## Revendications

1. Une structure comprenant une unité de vitrage (1) montée à l'intérieur, l'unité de vitrage (1) comprenant une pluralité de vitres (3, 5) adaptées à laisser passer un rayonnement électromagnétique avec de faibles pertes de transmission, l'unité de vitrage (1) comprenant :
• une première vitre (3) définissant au moins une première surface (13) et une deuxième surface (15), la première vitre (3) comprenant une première couche de verre (23) ;
• une deuxième vitre (5) à une distance donnée de la première vitre (3) au moyen d'une entretoise (7) formant un espace ou un intervalle (11) entre la première et la deuxième vitre (3, 5), et définissant au moins une troisième surface (17) et une quatrième surface (19), la deuxième vitre (5) comprenant une deuxième couche de verre (23), les première, deuxième, troisième et quatrième surfaces (13, 15, 17, 19) étant agencées de telle sorte que le rayonnement électromagnétique, en se propageant à travers l'unité de vitrage (1), se propage également à travers les première, deuxième, troisième et quatrième surfaces (13, 15, 17, 19) ;
• un revêtement structuré (25) ayant une émissivité thermique inférieure à environ 20%, placé sur une ou plusieurs des surfaces (13, 15, 17, 19), le revêtement (25) étant divisé en pastilles conductrices (29) électriquement isolées les unes des autres,
dans laquelle la permittivité relative de la première couche de verre (23) et de la deuxième couche de verre (23) est inférieure à 5.5 à une ou plusieurs fréquences dans la plage de 300 MHz à 70 GHz, dans laquelle une ou plusieurs des pastilles (29) ont une forme allongée, et dans laquelle les première, deuxième, troisième et quatrième surfaces (13, 15, 17, 19) sont des surfaces en verre.

2. La structure selon la revendication 1, dans laquelle la longueur ou la projection de longueur de l'une ou plusieurs pastilles (29) le long d'un premier axe est supérieure à la hauteur ou à la projection de hauteur de l'une ou plusieurs pastilles (29) le long d'un deuxième axe différent, dans laquelle le premier axe suit sensiblement horizontalement une surface de pastille respective ou son extension virtuelle, et le deuxième axe suit la surface de pastille respective ou son extension virtuelle orthogonalement au premier axe.

3. La structure selon la revendication 2, dans laquelle le premier axe est un axe horizontal, et le deuxième axe est un axe vertical.

4. La structure selon l'une quelconque des revendications précédentes, dans laquelle au moins un tiers de la surface respective (13, 15, 17, 19) où le revêtement (25) est placé est recouvert de pastilles (29) ayant une forme allongée, et/ou dans laquelle l'une ou plusieurs pastilles (29) s'étendent sensiblement horizontalement.

5. La structure selon l'une quelconque des revendications précédentes, dans laquelle le rapport entre une première dimension longitudinale et une deuxième dimension orthogonale de la pastille respective est compris entre 1.3 et 8.

6. La structure selon l'une quelconque des revendications précédentes, dans laquelle les pastilles (29) sont séparées les unes des autres par des tranchées gravées au laser dans le revêtement structuré (25).

7. La structure selon l'une quelconque des revendications précédentes, dans laquelle les pastilles (29) sont séparées les unes des autres par une distance comprise entre 0.001 mm et 0.5 mm, et plus spécifiquement par une distance comprise entre 0.01 mm et 0.1 mm.

8. La structure selon l'une quelconque des revendications précédentes, dans laquelle au moins l'une des première et deuxième vitres (3, 5) est un élément feuilleté, et dans laquelle l'élément feuilleté est formé par une couche polymère (21) et la couche de verre respective (23) liées ensemble au moyen d'une couche intermédiaire respective entre les couches polymère et verre respectives (21, 23).

9. La structure selon la revendication 8, dans laquelle la couche intermédiaire respective comprend au moins l'un des matériaux suivants : polyvinylbutyral, éthylène-acétate de vinyle, polyuréthane thermoplastique et élastomère polyoléfinique.

10. La structure selon l'une quelconque des revendications précédentes, dans laquelle le revêtement (25) est placé au moins sur l'une des surfaces (15, 17) faisant face à l'espace (11).

11. La structure selon l'une quelconque des revendications précédentes, dans laquelle l'unité de vitrage (1) comprend en outre une troisième vitre (6) comprenant une couche polymère (21) et/ou une autre couche de verre (23), la permittivité relative de la couche respective (21, 23) de la troisième vitre (6) étant inférieure à 5.5 à une ou plusieurs fréquences dans la plage de 300 MHz à 70 GHz.

12. La structure selon l'une quelconque des revendications précédentes, dans laquelle au moins certaines des pastilles (29) ont une longueur comprise entre 0.5 mm et 20 mm, et plus spécifiquement comprise entre 4 mm et 10 mm.

13. La structure selon l'une quelconque des revendications précédentes, dans laquelle la structure est une voiture ferroviaire ou un bâtiment.
